Europäisches Patentamt

European Patent Office

Office européen des brevets

(11) Publication number: **0 310 682 B1**

# EUROPEAN PATENT SPECIFICATION

(45) Date of publication of patent specification: **02.03.94**  (51) Int. Cl.⁵: **H01F 1/11, C01G 49/00**

(21) Application number: **88903389.0**

(22) Date of filing: **21.04.88**

(86) International application number:
**PCT/JP88/00391**

(87) International publication number:
**WO 88/08611 (03.11.88 88/24)**

(54) **FINE FERROMAGNETIC POWDER FOR MAGNETIC RECORDING.**

(30) Priority: **21.04.87 JP 98395/87**

(43) Date of publication of application:
**12.04.89 Bulletin 89/15**

(45) Publication of the grant of the patent:
**02.03.94 Bulletin 94/09**

(84) Designated Contracting States:
**BE DE FR GB**

(56) References cited:
**EP-A- 0 095 070**
**EP-A- 0 183 988**

(73) Proprietor: **ISHIHARA SANGYO KAISHA LTD.**
**No. 3-22, Edobori 1-chome**
**Nishi-ku Osaka 550(JP)**

(72) Inventor: **NAKATA, Kazuo Chuo Kenkyusho**
**Ishihara S.K. Ltd., 3-1, Nishishibukawa**
**2-chome**
**Kusatsu-shi Shiga 525(JP)**
Inventor: **HIRAI, Masaharu Chuo Kenkyusho**
**Ishihara S. K. Ltd.**
**3-1, Nishishibukawa 2-chome**
**Kusatsu-shi Shiga525a(JP)**
Inventor: **TAKUMI, Nobusuke Chuo Ken-**
**kyusho**
**Ishihara S. K. Ltd.**
**3-1, Nishishibukawa 2-chome**
**Kusatsu-shi Shiga 525(JP)**
Inventor: **KATO, Saburo Chuo Kenkyusho**
**Ishihara S. K. Ltd.**
**3-1, Nishishibukawa 2-chome**
**Kusatsu-shi Shiga 525(JP)**

(74) Representative: **Henkel, Feiler, Hänzel & Part-**
**ner**
**Möhlstrasse 37**
**D-81675 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

TECHNICAL FIELD

This invention relates to ferromagnetic fine powder for magnetic recording comprising barium ferrite crystal particles which is useful in high-density magnetic recording medium, for example, in various information processings and recordings by means of audio tape, video tape, magnetic cards, magnetic disks, computer tapes and the like, especially perpendicular recording utilizing residual magnetization perpendicular to the recording medium plane.

BACKGROUND ART

As ferromagnetic fine powder for magnetic recording medium, there are most generally used magnetic powders of needle crystals of $\gamma$-$Fe_2O_3$, cobalt coated $\gamma$-$Fe_2O_3$, iron-type metals, $Cr_2O_3$ and the like. These magnetic powders have a needle-like particle shape and hence are not sufficient in packing density. Cobalt coated $\gamma$-$Fe_2O_3$ permits enhancement of coercive force but is not satisfactory in the thermal stability of coercive force, etc. Further in the case of the iron-type metals, a high saturation magnetization can be attained, but a problem of so-called low corrosion resistance is unavoidable and there are a few problems, for example, easy deterioration of the stability with the lapse of time of magnetic characteristics. In addition, in the case of the above-mentioned needle crystals magnetic powders, magnetic recording and processing is conducted by a so-called longitudinal recording method which comprises coating on a base film a coating liquid prepared by dispersing the magnetic powder in a binder resin, thereby forming a magnetic recording medium, orienting the needle crystals in the direction of inside the surface of the medium, and utilizing the residual magnetization in said direction. It is well known that in such a recording method, enhancement of the recording density by use of the aforesaid needle crystal magnetic powder is very difficult because an attempt to increase the density of magnetic recording results in an increase of the demagnetizing field in the medium and tends to deteriorate the playback characteristics particularly in the short wavelength region.

On the other hand, in consideration of the above problems in the case where the aforesaid needle crystals magnetic powders are used, attempts have been made in recent years to enhance the recording density by applying a perpendicular magnetic recording method which comprises forming a coated-form magnetic recording medium by use of powder consisting of platelet like hexagonal ferrite crystal particles, e.g., barium ferrite crystal particles, and magnetizing the recording medium in a direction perpendicular to the surface of the recording medium. As the barium ferrite magnetic powder used in the above recording method, various ones have been proposed, and many of them consist of magnetoplumbite type barium ferrite crystal particles composed of $BaO \cdot nFe_2O_3$ (n = 5 or 6) in which a portion of the Fe atoms have been usually replaced by a very small amount of various foreign metallic elements such as Co and Ti for controlling the coercive force. Such barium ferrite magnetic powders consist of platelet like particles and hence are excellent in surface smoothness and packing density in magnetic recording medium, but there have been obtained only those having a saturation magnetization of at most about 60 emu/g, and improvement of the saturation magnetization is eagerly desired for increasing the output of magnetic recording medium.

It is known that as to the saturation magnetization of barium ferrite crystals, crystals of W-type crystal phase ($Ba \cdot Me^{2+}Fe_{16}O_{27}$) have a higher saturation magnetization than do crystals of the above-mentioned magnetoplumbite type crystal phase. It has been also proposed to utilize the crystals of W-type crystal phase as a high-saturation-magnetization ferrite-based magnetic recording material. The W-type barium ferrite magnetic powders according to the propose are obtained usually by preparing a blend of metallic elements having a predetermined composition, and calcining the blend at a high temperature of about 1100-1350°C. The barium ferrite magnetic powders thus obtained have a high saturation magnetization, but they tend to undergo interparticle sintering or particle coarsening, so that deterioration of their dispersibility and orientation is unavoidable.

EP-A-0 095 070 discloses a magnetic recording medium composed of a mixture of barium ferrite particles and ferromagnetic particles. The saturation magnetization of 70 to 220 emu/g of the mixture is mainly attributed to the coexisting ferromagnetic particles. Indeed, the ferromagnetic particles are not barium ferrite particles, but metal alloys, magnetite, -ferrite, Co-modified magnetite or Co-modified -ferrite particles.

Thus, they are not satisfactory as high-packing-density magnetic recording materials and involve a few problems which should be improved. However with the tendency toward enhancement of the recording density, S/N ratio and output of magnetic recording medium, there has recently been more and more desired ferrite-based ferromagnetic powder which has a still finer particle size of 0.3 $\mu$m or less, preferably 0.2 $\mu$m or less and a high saturation magnetization.

## DISCLOSURE OF THE INVENTION

This invention is intended to provide platelet like ferrite magnetic powder having a very fine particle size and a high saturation magnetization which is particularly suitable as a magnetic magerial for high-density magnetic recording in the case of not only perpendicular magnetic recording out also longitudinal magnetic recording.

The present inventors have conducted various researches on atomization of coercive force-controlled element-substituted magnetoplumbite type barium ferrite which is suitable for enhancing the recording density of magnetic recording medium. The present inventors have noted the importance of development of platelet like ferrite magnetic powder having high saturation magnetization characteristics as described above, and have conducted further research. Consequently, the present inventors have found that ferrite magnetic powder consisting of platelet like ferrite crystal particles in which Fe atoms constituting the particles have been replaced by a combination of two specific foreign metallic elements in a definite or larger amount in a certain range, and having a specific crystal phase different from W-type, can satisfy both requirements, i.e., high saturation magnetization characteristics and platelet like and very fine particles, whereby this invention has been accomplished.

That is to say, this invention relates to ferromagnetic fine powder for magnetic recording characterized by comprising platelet like ferrite crystal particles having such a metallic element composition that the Ba/Fe molar ratio is 1/50 to 1/8 and that the total amount of Ni and Zn is less than 0.5 mole and not less than 0.07 mole per mole of Fe, a crystal phase of magnetoplumbite phase, spinel phase, or composite phase thereof, and a saturation magnetization of 60 emu/g or more; and a process for producing said fine powder.

## BEST MODE FOR CONDUCTING THE INVENTION

The ferromagnetic fine powder for magnetic recording of this invention contains Ba, Fe, Ni and Zn as constituents. It is sufficient that the quantitative relationship between these metals satisfy the requirements described below, and the amounts of the constituents can be optionally selected in the ranges corresponding to the requirements.

As to the metallic elements, the Ba/Fe molar ratio is 1/50 to 1/8, preferably 1/45 to 1/10, and the total amount of Ni and Zn (Ni + Zn) is less than 0.5 mole and not less than 0.07 mole, preferably 0.14 to 0.4 mole per mole of Fe. For attaining a sufficiently high saturation magnetization, it is preferable to adjust the amount of Zn to 0.03 mole or more per mole of Fe. When the Ba/Fe molar ratio is beyond the above range, the exhibition of saturation magnetization is insufficient. On the other hand, when the Ba/Fe molar ratio is below the above range, the particle size of the ferromagnetic fine powder becomes too large. Therefore, it is not desirable. When the total amount of Ni and Zn (Ni + Zn) and the amount of Zn are below the above respective ranges, the saturation magnetization cannot be sufficiently enhanced to the desired range. As described above, incluing Ni and Zn in the ferromagnetic fine powder makes it easy to make the particle size fine, and therefore co-use of a combination of Ni and Zn is important in this invention and their synergistic effect remarkably enhances the saturation magnetization. The platelet like ferrite crystal particle powder obtained according to this invention has a saturation magnetization of 60 emu/g or more and a particle size of 0.15 $\mu$m or less, and hence is very suitable as ferromagnetic fine powder for high magnetic recording.

In this invention, it is also possible to adjust the coercive force to a value in a desired range by replacing a portion of the Fe atoms by a small amount of various foreign metallic elements such as Co, Ti, etc. which are included in the ferromagnetic fine powder by a conventional method, for example, for controlling the coercive force.

The ferromagnetic fine powder comprising platelet like ferrite crystal particles of this invention may be any one so long as it substantially shows a X-ray diffraction pattern of magnetoplumbite phase, spinel phase, or composite phase thereof, though its crystal phase is particularly preferably a composite phase of magnetoplumbite phase and spinel phase.

The ferromagnetic fine powder according to the above-mentioned constitution of this invention can be produced, for example, in the following manner. First, there is prepared an aqueous solution of metal compounds which contains a barium compound, an iron compound and a compound of nickel and zinc in their respective predetermined amounts.

3

As these metal compounds, any compounds of the metals may be used so long as they are soluble in water, and there are exemplified inorganic acid salts such as sulfates, halides, nitrates and the like, and organic acid salts such as acetates and the like. In particular, chlorides and nitrates are suitably used.

Next, an alkaline suspension having a pH of 11 or higher is prepared by contacting and mixing the above-mentioned aqueous solution of metal compounds with an aqueous solution of an alkali such as NaOH, KOH, $NH_4OH$ or the like. The contacting and mixing may be conducted by any of addition of the aqueous solution of metal compounds to the aqueous alkali solution, addition of the aqueous alkali solution to the aqueous solution of metal compounds, and simutlaneous addition of the two solutions. In this case, for producing still finer particles and improving their dispersibility, it is more preferable that the alkali concentration of the aforesaid suspension is 1.5 moles/liter or more, more preferably 2 moles/liter or more on a free OH basis.

In preparing the alkaline suspension, metal compounds may be further added so that the suspension contains predetermined amounts of the metallic elements.

The alkaline suspension thus obtained is subjected to heat reaction treatment at 30 to 250°C, preferably 60 to 200°C in a reactor equipped with a heater or in a pressure vessel such as an autoclave to form a precursor of ferrite as to the above heat treatment. The treatment temperature is below the above range, the progress of reaction is too slow, while when it is beyond the above range, there are disadvantages, for example, a high apparatus cost.

The ferrite precursor thus obtained is filtered, washed with water, dried, and subjected to calcining treatment. In order to make the precursor into platelet ferrite particles by calcining treatment, the precursor is calcined at 600 to 1,000°C, preferably 700 to 900°C. When the calcining temperature is below the above range, crystallization into ferrite particle does not proceed sufficiently and the saturation magnetization is low. When the calcining temperature is beyond the above range, ferrite particles are sticked to one another or sintered, resulting in formation of an aggregate, so that the dispersibility in formation into a coating material tends to be greatly deteriorated. The calcining can be conducted usually for about 0.5 - 5 hours by means of any of various types of apparatuses such as rotary furnace, fluidized-bed furnace, and the like. For prevention of sintering of the particles, control of their shape, improvement of their magnetic characteristics, etc., the following treatment may be carried out before the above-mentioned calcining treatment. A silicon compound or a phosphorus compound is attached to the aforesaid precursor, or a halide or sulfate of an alkali metal or alkaline earth metal is mixed with the precursor, and then calcining is conducted.

As another method for including the aforesaid metallic elements, Ni and Zn in the ferromagnetic fine powder, there can be employed a method which comprises treating the ferrite precursor obtained, as described above, by heating at 60 to 250°C with a portion or the whole of predetermined amounts of Ni and Zn to be included. As a method for the treatment in this case, there is exemplified, for example, a method which comprises adding an aqueous solution of salt compounds of said metals to an aqueous suspension of the ferrite precursor, evaporating the resulting mixture to dryness or neutralizing the mixture with an alkali, and thereby applying a precipitate of said metals to particles of the precursor.

This invention is further illustrated below with reference to Examples and Comparative Examples.

## EXAMPLES OF THE INVENTION

### Example 1

83.3 Milliliters of an aqueous $BaCl_2$ solution having a concentration of 1 mole/liter, 1,000 ml of an aqueous $FeCl_3$ solution having a concentration of 1 mole/liter, 83.3 ml of an aqueous $NiCl_2$ solution having a concentration of 1 mole/liter and 83.3 ml of an aqueous $ZnCl_2$ solution having a concentration of 1 mole/liter were mixed [Ba/Fe (Molar ratio) = 1/12, (Ni + Zn)/Fe (molar ratio) = 0.17], and the mixture was added to 1,950 ml of an aqueous NaOH solution having a concentration of 10 moles/liter to prepare an alkaline suspension (free OH concentration: 5 moles/liter) containing a brown precipitate. Subsequently, said suspension was heated in an autoclave at 150°C for 1 hour to form a ferrite precursor.

The ferrite precursor obtained was filtered, washed with water, dried, and then calcined at 800°C for 1 hour to obtain powder consisting of platelet ferrite crystal particles. Then, the powder obtained was immersed in an aqueous acetic acid solution, thereafter filtered, washed with water, and dried to obtain ferromagnetic fine powder of this invention. This sample is named (A).

4

Example 2

Ferromagnetic fine powder of this invention was obtained by carrying out treatment by the same method as in Example 1, except that 55.6 ml of an aqueous $BaCl_2$ solution having a concentration of 1 mole/liter, 1,000 ml of an aqueous $FeCl_3$ solution having a concentration of 1 mole/liter, 83.3 ml of an aqueous $NiCl_2$ solution, and 83.3 ml of an aqueous $ZnCl_2$ solution having a concentration of 1 mole/liter were mixed [Ba/Fe (molar ratio) = 1/12, (Ni + Zn)/Fe (molar ratio) = 0.17] and that the mixture was added to 1,911 ml of an aqueous NaOH solution having a concentration of 10 moles/liter to prepare an alkaline suspension (free OH concentration: 5 moles/liter) containing a brown precipitate. This sample is named (B).

Example 3

Ferromagnetic fine powder of this invention was obtained by carrying out treatment by the same method as in Example 1, except that 41.7 ml of an aqueous $BaCl_2$ solution having a concentration of 1 mole/liter, 1,000 ml of an aqueous $FeCl_3$ solution having a concentration of 1 mole/liter, 125 ml of an aqueous $NiCl_2$ solution having a concentration of 1 mole/liter and 125 ml of an aqueous $ZnCl_2$ solution having a concentration of 1 mole/liter were mixed [Ba/Fe (molar ratio) = 1/24, (Ni + Zn)/Fe (molar ratio) = 0.25] and that the mixture was added to 2,008 ml of an aqueous NaOH solution having a concentration of 10 moles/liter to prepare an alkaline suspension (free OH concentration: 5 moles/liter) containing a brown precipitate. This sample is named (C).

Example 4

Ferromagnetic fine powder of this invention was obtained by carrying out treatment by the same method as in Example 1, except that 22.7 ml of an aqueous $BaCl_2$ solution having a concentration of 1 mole/liter, 1,000 ml of an aqueous $FeCl_3$ solution having a concentration of 1 mole/liter, 182 ml of an aqueous $NiCl_2$ solution having a concentration of 1 mole/liter and 182 ml of an aqueous $ZnCl_2$ solution having a concentration of 1 mole/liter were mixed [Ba/Fe (molar ratio) = 1/44, (Ni + Zn)/Fe (molar ratio) = 0.36] and that the mixture was added to 2,141 ml of an aqueous NaOH solution having a concentration of 10 moles/liter to prepare an alkaline suspension (free OH concentration: 5 moles/liter) containing a brown precipitate. This sample is named (D).

Example 5

Ferromagnetic fine powder of this invention was obtained by carrying out treatment by the same method as in Example 1, except that 62.5 ml of an aqueous $BaCl_2$ solution having a concentration of 1 mole/liter, 1,000 ml of an aqueous $FeCl_3$ solution having a concentration of 1 mole/liter, 62.5 ml of an aqueous $NiCl_2$ solution having a concentration of 1 mole/liter and 62.5 ml of an aqueous $ZnCl_2$ solution having a concentration of 1 mole/liter were mixed [Ba/Fe (molar ratio) = 1/16, (Ni + Zn)/Fe (molar ratio) = 0.125] and that the mixture was added to 1,863 ml of an aqueous NaOH solution having a concentration of 10 moles/liter to prepare an alkaline suspension (free OH concentration: 5 moles/liter) containing a brown precipitate. This sample is named (E).

Example 6

Ferromagnetic fine powder of this invention was obtained by carrying out treatment by the same method as in Example 1, except that 62.5 ml of an aqueous $BaCl_2$ solution having a concentration of 1 mole/liter, 1,000 ml of an aqueous $FeCl_3$ solution having a concentration of 1 mole/liter, 125 ml of an aqueous $NiCl_2$ solution having a concentration of 1 mole/liter and 125 ml of an aqueous $ZnCl_2$ solution having a concentration of 1 mole/liter were mixed [Ba/Fe (molar ratio) = 1/16, (Ni + Zn)/Fe (molar ratio) = 0.25] and that the mixture was added to 2,038 ml of an aqueous NaOH solution having a concentration of 10 moles/liter to prepare an alkaline suspension (free OH concentration: 5 moles/liter) containing a brown precipitate. This sample is named (F).

Example 7

Ferromagnetic fine powder of this invention was obtained by carrying out treatment by the same method as in Example 1, except that 62.5 ml of an aqueous $BaCl_2$ solution having a concentration of 1 mole/liter, 1,000 ml of an aqueous $FeCl_3$ solution having a concentration of 1 mole/liter, 188 ml of an aqueous $NiCl_2$ solution having a concentration of 1 mole/liter and 188 ml of an aqueous $ZnCl_2$ solution having a concentration of 1 mole/liter were mixed [Ba/Fe (molar ratio) = 1/16, (Ni + Zn)/Fe (molar ratio) = 0.38] and that the mixture was added to 2,213 ml of an aqueous NaOH solution having a concentration of 10 moles/liter to prepare an alkaline suspension (free OH concentration: 5 moles/liter) containing a brown precipitate. This sample is named (G).

Example 8

Ferromagnetic fine powder of this invention was obtained by carrying out treatment by the same method as in Example 1, except that 62.5 ml of an aqueous $BaCl_2$ solution having a concentration of 1 mole/liter, 1,000 ml of an aqueous $FeCl_3$ solution having a concentration of 1 mole/liter, 93.8 ml of an aqueous $NiCl_2$ solution having a concentration of 1 mole/liter, 93.8 ml of an aqueous $ZnCl_2$ solution having a concentration of 1 mole/liter, 50 ml of an aqueous $CoCl_2$ solution having a concentration of 1 mole/liter and 50 ml of an aqueous $TiCl_4$ solution having a concentration of 1 mole/liter were mixed [Ba/Fe (molar ratio) = 1/16, (Ni + Zn)/Fe (molar ratio) = 0.19] and that the mixture was added to 2,110 ml of an aqueous NaOH solution having a concentration of 10 moles/liter to prepare an alkaline suspension (free OH concentration: 5 moles/liter) containing a brown precipitate. This sample is named (H).

Example 9

Ferromagnetic power of this invention was obtained by carrying out treatment in the same manner as in Example 6, except that the temperature at heating of the alkaline suspension was changed to 90°C. This sample is named (J).

Comparative Example 1

Ferromagnetic fine powder for comparison was obtained by carrying out treatment by the same method as in Example 1, except that 62.5 ml of an aqueous $BaCl_2$ solution having a concentration of 1 mole/liter and 1,000 ml of an aqueous $FeCl_3$ solution having a concentration of 1 mole/liter were mixed [Ba/Fe (molar ratio) = 1/16] and that the mixture was added to 1,688 ml of an aqueous NaOH solution having a concentration of 10 moles/liter to prepare an alkaline suspension (free OH concentration: 5 moles/liter) containing a brown precipitate. This sample is named (K).

Comparative Example 2

Ferromagnetic powder for comparison was obtained by carrying out treatment by the same method as in Example 1, except that 62.5 ml of an aqueous $BaCl_2$ solution having a concentration of 1 mole/liter, 1,000 ml of an aqueous $FeCl_3$ solution having a concentration of 1 mole/liter, 31.3 ml of an aqueous $NiCl_2$ solution having a concentration of 1 mole/liter and 31.3 ml of an aqueous $ZnCl_2$ solution having a concentration of 1 mole/liter were mixed [Ba/Fe (molar ratio) = 1/16, (Ni + Zn)/Fe (molar ratio) = 0.063] and that the mixture was added to 1,775 ml of an aqueous NaOH solution having a concentration of 10 moles/liter to prepare an alkaline suspension (free OH concentration: 5 moles/liter) containing a brown precipitate. This sample was named (L).

Comparative Example 3

Ferromagnetic powder for comparison was obtained by carrying out treatment by the same method as in Example 1, except that 62.5 ml of an aqueous $BaCl_2$ solution having a concentration of 1 mole/liter, 1,000 ml of an aqueous $FeCl_3$ solution having a concentration of 1 mole/liter and 313 ml of an aqueous $NiCl_2$ solution having a concentration of 1 mole/liter were mixed [Ba/Fe (molar ratio) = 1/16, (Ni + Zn)/Fe (molar ratio) = 0.31] and that the mixture was added to 2,125 ml of an aqueous NaOH solution having a concentration of 10 moles/liter to prepare an alkaline suspension (free OH concentration: 5 moles/liter) containing a brown precipitate. This sample is named (M).

Comparative Example 4

Ferromagnetic powder for comparison was obtained by carrying out treatment by the same method as in Example 1, except that 146 ml of an aqueous $BaCl_2$ solution having a concentration of 1 mole/liter, 1,000 ml of an aqueous $FeCl_3$ solution having a concentration of 1 mole/liter, 82.5 ml of an aqueous $CoCl_2$ solution having a concentration of 1 mole/liter and 82.5 ml of an aqueous $TiCl_4$ solution were mixed [Ba/Fe (molar ratio) = 1/10.3, (Ni + Zn)/Fe (molar ratio) = 0] and that the mixture was added to 2,068 ml of an aqueous NaOH solution having a concentration of 10 moles/liter to prepare an alkaline suspension (free OH concentration: 5 moles/liter) containing a brown precipitate. This sample is named (N).

For the above-mentioned samples (A) to (H) and (J) to (N), there were measured average particles size (Dp: electron microscopic method), coercive force (Hc) and saturation magnetization ($\sigma_s$) at a measuring magnetic field of 10 KOe by means of a sample-vibrating magnetometer Model VSM-3 mfd. by Toei Industry Co. and X-ray diffraction pattern. The results of the measurements are shown in Table 1.

Table 1

| | Sample No. | | Composition of alkaline suspension (molar ratio) | | | | | Physical properties of ferrite crystal particles | | |
|---|---|---|---|---|---|---|---|---|---|---|
| | | | Ba/Fe | (Ni+Zn)/Fe | Zn/Fe | Co/Fe | Ti/Fe | Hc (Oe) | $\sigma_s$ (emu/g) | Shape |
| Example | 1 | A | 1/12 | 0.17 | 0.083 | – | – | 2120 | 60.0 | platelet like |
| | 2 | B | 1/18 | 0.17 | 0.083 | – | – | 1450 | 62.0 | " |
| | 3 | C | 1/24 | 0.25 | 0.13 | – | – | 921 | 65.2 | " |
| | 4 | D | 1/44 | 0.36 | 0.18 | – | – | 263 | 70.1 | " |
| | 5 | E | 1/16 | 0.13 | 0.063 | – | – | 2290 | 60.6 | " |
| | 6 | F | 1/16 | 0.25 | 0.13 | – | – | 1141 | 64.6 | " |
| | 7 | G | 1/16 | 0.38 | 0.19 | – | – | 286 | 66.9 | " |
| | 8 | H | 1/16 | 0.19 | 0.094 | 0.05 | 0.05 | 689 | 61.3 | " |
| | 9 | J | 1/16 | 0.25 | 0.13 | – | – | 1005 | 64.0 | " |
| Comparative Example | 1 | K | 1/16 | – | – | – | – | 3530 | 49.2 | " |
| | 2 | L | 1/16 | 0.063 | 0.031 | – | – | 2580 | 52.1 | " |
| | 3 | M | 1/16 | 0.31 | – | – | – | 409 | 50.8 | " |
| | 4 | N | 1/10.3 | – | – | 0.083 | 0.083 | 1050 | 50.5 | " |

(to be cont'd.)

Note:   M: magnetoplumbite phase, S: spinel phase,
        H: hematite phase
        $1 Oe = 79.6 \ Am^{-1}$

EP 0 310 682 B1

## Table 1 (Cont'd.)

| X-ray diffraction pattern (see Note) | Particle size (μm) |
|---|---|
| Substantially M | 0.07 |
| M >> S | 0.08 |
| M + S | 0.065 |
| Substantially S | 0.075 |
| Substantially M | 0.085 |
| M >> S | 0.065 |
| M < S | 0.055 |
| M >> S | 0.075 |
| M >> S | 0.06 |
| M >> H | 0.13 |
| Substantially M | 0.085 |
| M < S | 0.08 |
| M | 0.08 |

As is clear from the results shown in Table 1, the ferromagnetic fine powders comprising ferrite crystal particles of this invention have a crystal phase of substantially M phase, S phase or composite phase thereof, are very fine, have a high saturation magnetization of 60 emu/g or more, and have a suitable coercive force for magnetic recording.

The temperature characteristic of coercive force (the change of coercive force with temperature) of the ferromagnetic fine powder comprising ferrite crystal particles of this invention was measured to show satisfactory values. Furthermore, when said ferromagnetic fine powder was dispersed in a binder resin and a magnetic recording medium was produced by a conventional method, the powder was excellent in orientation and surface smoothness.

INDUSTRIAL APPLICABILITY

According to this invention, ferromagnetic fine powder comprising platelet like ferrite crystal particles with a very fine particle size having a high saturation magnetization value which is suitable for use particularly in perpendicular-magnetic-recording mediums and moreover also in longitudinal-recording mediums, can be obtained effectively by employing a relatively simple constitution, and therefore this invention is very useful for enhancement of recording density and output in magnetic recording.

**Claims**

1. A ferromagnetic fine powder for magnetic recording comprising platelet like Ba-ferrite crystal particles containing Ni and Zn, **characterized in that** the said ferrite particles have such a metallic element composition that the Ba/Fe molar ratio is 1/50 to 1/8 and that the total amount of Ni and Zn is less than 0.5 mole and not less than 0.07 mole per mole of Fe; a crystal phase of magnetoplumbite phase, spinel phase or composite phase thereof; and a high saturation magnetization of 60 emu/g or more.

2. A ferromagnetic fine powder for magnetic recording according to Claim 1, wherein the Ba/Fe molar ratio is 1/45 to 1/10.

3. A ferromagnetic fine powder for magnetic recording according to Claim 1, wherein the molar ratio of the total amount of Ni and Zn to Fe is 0.14 to 0.4.

4. A ferromagnetic fine powder for magnetic recording according to Claim 1, wherein the Zn/Fe molar ratio is 0.03 or more.

5. A process for producing ferromagnetic fine powder for magnetic recording, characterized by heating at 30 to 250 °C an alkaline suspension with a pH of 11 or higher containing metallic elements selected in such proportions that the Ba/Fe molar ratio is 1/50 to 1/8 and that the molar ratio of the total amount of Ni and Zn to Fe is less than 0.5 mole and not less than 0.07, and a free OH concentration, thereby obtaining a precursor of ferrite, and calcining said precursor at 600 to 1,000°C to form platelet like ferrite crystal particles having a saturation magnetization of 60 emu/g or more.

6. A process for producing ferromagnetic fine powder for magnetic recording according to Claim 5, wherein the Ba/Fe molar ratio is 1/45 to 1/10.

7. A process for producing ferromagnetic fine powder for magnetic recording according to Claim 5, wherein the molar ratio of the total amount of Ni and Zn to Fe is 0.14 to 0.4.

8. A process for producing ferromagnetic fine powder for magnetic recording according to Claim 5, wherein the Zn/Fe molar ratio is 0.03 or more.

9. A process for producing ferromagnetic fine powder for magnetic recording according to Claim 5, wherein the free OH concentration is 1.5 moles/liter or more.

10. A process for producing ferromagnetic fine powder for magnetic recording according to Claim 5, wherein the temperature at heat treatment of the alkaline suspension is 60 to 200°C.

11. A process for producing ferromagnetic fine powder for magnetic recording according to Claim 5, wherein the temperature at calcining of the ferrite precursor is 700 to 900°C.

**Patentansprüche**

1. Feines ferromagnetisches Pulver zur Magnetaufzeichnung, umfassend plättchenförmige oder -artige, Ni und Zn enthaltende kristalline Ba-Ferritteilchen, dadurch gekennzeichnet, daß die Ferritteilchen eine derartige Metallelementzusammensetzung aufweisen, daß das Molverhältnis Ba/Fe 1/15 bis 1/8 und die Gesamtmenge an Ni und Zn weniger als 0,5 Mol und nicht weniger als 0,07 Mol/Mol Fe betragen, eine Kristallphase in Form einer Magnetoplumbit-Phase, Spinell-Phase oder Mischphase hiervon aufweisen und eine hohe Sättigungsmagnetisierung von 60 Emu/g oder mehr besitzen.

2. Feines ferromagnetisches Pulver zur Magnetaufzeichnung nach Anspruch 1, wobei das Molverhältnis Ba/Fe 1/45 bis 1/10 beträgt.

3. Feines ferromagnetisches Pulver zur Magnetaufzeichnung nach Anspruch 1, wobei das Molverhältnis (Ni + Zn)/Fe 0,14 bis 0,4 beträgt.

4. Feines ferromagnetisches Pulver zur Magnetaufzeichnung nach Anspruch 1, wobei das Molverhältnis Zn/Fe 0,03 oder mehr beträgt.

5. Verfahren zur Herstellung eines feinen ferromagnetischen Pulvers zur Magnetaufzeichnung, gekennzeichnet durch Erwärmen einer alkalischen Suspension eines pH-Werts von 11 oder höher mit soviel metallischen Elementen, daß das Molverhältnis Ba/Fe 1/50 bis 1/8 und das Molverhältnis (Ni + Zn)/Fe weniger als 0,5 Mol und nicht weniger als 0,07 betragen, und freier OH-(Ionen)Konzentration auf 30 bis 250°C zur Bildung eines Ferritvorläufers und Calcinieren des Vorläufers bei 600 bis 1000°C zur Bildung plättchenförmiger oder -artiger Ferritkristallteilchen einer Sättigungsmagnetisierung von 60 Emu/g oder mehr.

6. Verfahren zur Herstellung eines feinen ferromagnetischen Pulvers zur Magnetaufzeichnung nach Anspruch 5, wobei das Molverhältnis Ba/Fe 1/45 bis 1/10 beträgt.

7. Verfahren zur Herstellung eines feinen ferromagnetischen Pulvers zur Magnetaufzeichnung nach Anspruch 5, wobei das Molverhältnis (Ni + Zn)/Fe 0,14 bis 0,4 beträgt.

8. Verfahren zur Herstellung eines feinen ferromagnetischen Pulvers zur Magnetaufzeichnung nach Anspruch 5, wobei das Molverhältnis Zn/Fe 0,03 oder mehr beträgt.

**9.** Verfahren zur Herstellung eines feinen ferromagnetischen Pulvers zur Magnetaufzeichnung nach Anspruch 5, wobei die freie OH-(Ionen)Konzentration 1,5 Mol/Liter oder mehr beträgt.

**10.** Verfahren zur Herstellung eines feinen ferromagnetischen Pulvers zur Magnetaufzeichnung nach Anspruch 5, wobei die Temperatur der Wärmebehandlung der alkalischen Suspension 60 bis 200°C beträgt.

**11.** Verfahren zur Herstellung eines feinen ferromagnetischen Pulvers zur Magnetaufzeichnung nach Anspruch 5, wobei die Calcinierungstemperatur des Ferritvorläufers 700 bis 900°C beträgt.

**Revendications**

**1.** Poudre fine ferromagnétique pour enregistrement magnétique, comprenant des particules de cristaux de ferrite-Ba en paillettes contenant du Ni et du Zn, caractérisée en ce que lesdites particules de ferrite ont une composition en éléments métalliques telle que le rapport molaire Ba/Fe va de 1:50 à 1:8 et en ce que la quantité totale de Ni et Zn est inférieure à 0,5 mole et non inférieure à 0,07 mole par mole de Fe; une phase cristalline consistant en une phase de magnétoplombite, une phase de spinelle ou une phase composite de celles-ci; et une aimantation à saturation élevée de 60 emu/g ou plus.

**2.** Poudre fine ferromagnétique pour enregistrement magnétique selon la revendication 1, dans laquelle le rapport molaire Ba:Fe va de 1:45 à 1:10.

**3.** Poudre fine ferromagnétique pour enregistrement magnétique selon la revendication 1, dans laquelle le rapport molaire de la quantité totale de Ni et Zn à Fe va de 0,14 à 0,4.

**4.** Poudre fine ferromagnétique pour enregistrement magnétique selon la revendication 1, dans laquelle le rapport molaire Zn:Fe est 0,03 ou plus.

**5.** Procédé pour la production d'une poudre fine ferromagnétique pour enregistrement magnétique, caractérisé par le chauffage à 30-250°C d'une suspension alcaline ayant un pH de 11 ou plus, contenant des éléments métalliques choisis en proportions telles que le rapport molaire Ba/Fe va de 1:50 à 1:8 et que le rapport molaire de la quantité totale de Ni et Zn à Fe est inférieur à 0,5 mole et non inférieur à 0,07, et ayant une teneur en groupes OH libres, pour l'obtention d'un précurseur de ferrite, et la calcination dudit précurseur a 600 - 1 000°C pour la formation de particules de cristaux de ferrite en paillettes ayant une aimantation à saturation de 60 emu/g ou plus.

**6.** Procédé pour la production d'une poudre fine ferromagnétique pour enregistrement magnétique selon la revendication 5, dans lequel le rapport molaire Ba/Fe va de 1:45 à 1:10.

**7.** Procédé pour la production d'une poudre fine ferromagnétique pour enregistrement magnétique selon la revendication 5, dans lequel le rapport molaire de la quantité totale de Ni et Zn à Fe va de 0,14 à 0,4.

**8.** Procédé pour la production d'une poudre fine ferromagnétique pour enregistrement magnétique selon la revendication 5, dans lequel le rapport molaire Zn/Fe est 0,03 ou plus.

**9.** Procédé pour la production d'une poudre fine ferromagnétique pour enregistrement magnétique selon la revendication 5, dans lequel la concentration des groupes OH libres est de 1,5 mole/litre ou plus.

**10.** Procédé pour la production d'une poudre fine ferromagnétique pour enregistrement magnétique selon la revendication 5, dans lequel la température dans le traitement thermique de la suspension alcaline est de 60 à 200°C.

**11.** Procédé pour la production d'une poudre fine ferromagnétique pour enregistrement magnétique selon la revendication 5, dans lequel la température lors de la calcination du précurseur de ferrite est de 700 à 900°C.